# EUROPÄISCHE PATENTSCHRIFT

(11) **EP 0 722 873 B1**
(45) Veröffentlichungstag und Bekanntmachung des Hinweises auf die Patenterteilung: **05.08.1998**
(21) Anmeldenummer: 95117774.0
(22) Anmeldetag: 11.11.1995
(51) Int. Cl.: B61D 17/20

(54) **Übergangsbrücke**
Bridge
Passerelle

(30) Priorität: 19.01.1995 DE 29500795 U
(43) Veröffentlichungstag der Anmeldung: 24.07.1996
(73) Patentinhaber: HÜBNER Gummi- und Kunststoff GmbH, D-34123 Kassel (DE)
(72) Erfinder: Goebels, André, D-34134 Kassel (DE)
(74) Vertreter: Walther, Robert, Dipl.-Ing.

(56) Entgegenhaltungen:
- DE-C- 640 849

## Beschreibung

Die Erfindung betrifft eine Übergangsbrücke zwischen zwei gelenkig miteinander verbundenen Fahrzeugen, wobei die Übergangsbrücke mehrere relative zueinander bewegliche und ineinander verschiebliche Tritt- und Gleitglieder aufweist.

Die DE 640 849 zeigt eine Übergangsbrücke bestehend aus einer einzigen durchgängien Bodenplatte.

Aus der DE-PS 35 41 367 ist ein Verbindungsgang für zwei Fahrzeuge bekannt, bei denen die Übergangsbrücke als durchgehende Bodenplatte ausgebildet ist. Um sicherzustellen, daß eine derartige durchgängige Bodenplatte sämtlichen Fahrbewegungen nachgeben kann, ist vorgesehen, daß die Bodenplatte, die zur Versteifung einzelne Tragstangen aufweist, im wesentlichen aus einem nachgiebigen Material, also z. B. Gummi besteht. Zur Halterung und zur Führung der Bodenplatte ist eine senkrecht, zur Trittfläche angeordnete Schere vorgesehen, die mit dem Wagenkasten einerseits und dem Kuppelrahmen, als Verbindung der beiden Faltenbälge, andererseits verbunden ist. Nachteilig bei einer derartigen Brücke ist, daß bei Kurvenfahrt oder aber auch bei Querversatz die Bodenplatte sich wellenförmig aufschiebt, so daß die Gefahr des Stolperns besteht. Auf der Kurvenaußenseite hingegen besteht die Gefahr der Überdehnung des Materials mit der Folge, daß die Bodenplatte reißt.

Eine Übergangsbrücke der eingangs genannten Art ist aus der EP-A 583 491 bekannt; hierbei sind die einzelnen Glieder der Gliederbrücke in einem seitlichen, also parallel zur Fahrzeugslängsachse verlaufenden Rahmen geführt und dort gegenüber dem Rahmen beweglich gelagert. Die Lagerung der einzelnen Glieder in dem Rahmen ist relativ aufwendig, da diese in der Lage sein müssen, sämtlichen auftretenen Fahrbewegungen, z. B. bei Höhenversatz oder auch bei Querversatz, nachgeben zu können. Allerdings ist der Radius, um den sich die bekannte Brücke beim Durchfahren von Kurven verdrehen kann, aufgrund der Befestigung der Glieder eingeschränkt.

Der Erfindung liegt daher die Aufgabe zugrunde, eine Übergangsbrücke der eingangs genannten Art zu schaffen, die einfacher und damit preiswerter in der Herstellung ist, und die dennoch in der Lage ist, sämtlichen auftretenen Fahrbewegungen auch bei engen Kurven nachgeben zu können, ohne daß sich Spalte zwischen den einzelnen Gliedern bilden.

Die Aufgabe wird erfindungsgemäß dadurch gelöst, daß die Glieder durch ein Scherengestell zur Erzeugung einer fächerartigen Bewegung bei Spreizung und Kontraktion der Brücke miteinander verbunden sind, wobei das Scherengestell unter Federspannung steht; vorzugsweise wird hierbei der Abstand der Glieder der Brücke im wesentlichen gleich gehalten. Durch ein derartiges Scherengestell wird somit erreicht. daß auch beim Durchfahren von engen Kurven keine Spalte zwischen den einzelnen Gliedern entstehen. Dadurch, daß das Scherengestell unter Federspannung steht, wird bewirkt, daß sich die einzelnen Glieder, nach deren Auslenkung aufgrund einer Kurvenfahrt, im wesentlichen selbständig zurückstellen. Hierbei kann die entsprechende Federspannung durch die Anordnung von Zugfedern im Kreuzungsbereich der Schrerenglieder erzeugt werden; denkbar ist allerdings auch die Anordnung von Federn unmittelbar an den Gliedern der Gliederbrücke.

Um sicherzustellen, daß jedes der einzelnen Glieder der Übergangsbrücke in der Lage ist, den auftretenen Fahrbewegungen nachgeben zu können, ist vorgesehen, die Glieder der Übergangsbrücke, und hier insbesondere jedes Glied der Übergangsbrücke, mit dem Scherengestell zu verbinden. Um zu gewährleisten, daß das Scherengestell auch Tragfunktion übernehmen kann, ist das Scherengestell in der vertikalen Ebene aufspannbar; das bedeutet, daß das Scherengestell senkrecht zur Trittfläche angeordnet ist.

Zur Verbindung des Scherengestells mit dem Glied der Übergangsbrücke ist im einzelnen weiterhin vorgesehen, daß im Kreuzungsbereich zweier Glieder des Scherengestells entsprechende Mittel, beispielsweise ein Drehgelenk, vorgesehen ist. Um zu verhindern, daß während einer Kurvenfahrt zweier Fahrzeuge sich im Kurvenaußenbereich Spalte zwischen den einzelnen Glieder der Übergangsbrücke bilden, sind die Glieder der Gliederbrücke ineinander verschieblich gelagert sind. Die ineinander verschiebliche Lagerung der Glieder der Übergangsbrücke ist hierbei derart getroffen, daß sich die einzelnen Glieder in einem bestimmten Maß überdecken, wobei das Maß für die Überdeckung abhängig ist von dem mit den Fahrzeugen zu durchfahrenden Kurvenradius.

Nach einem besonderen Merkmal der Erfindung ist die Brücke in zwei Raumrichtungen formschlüssig mit dem Fahrzeug verbindbar. Hierzu weist das Endglied der Übergangsbrücke Mittel zur Verbindung mit dem Fahrzeug auf. Im einzelnen ist zur Verbindung vorgesehen, daß an dem letzten Glied der Übergangsbrücke vertikal und horizontal drehbare Rollen angeordnet sind, die durch eine am Fahrzeug angeordnete Wanne aufgenommen werden. Durch diese Art der Verbindung der Brücke mit dem Fahrzeug wird erreicht, daß die Brücke in der Wanne aufliegt, und somit beim Entkuppeln zweier Fahrzeuge nur noch abgehoben werden muß. Im Gegensatz zum Stand der Technik gem. der EP-A 583 491 ist für die Anlenkung der Übergangsbrücke an das Fahrzeug somit auch kein gesonderter Raum mehr innerhalb des Fahrzeugs vorgesehen; vielmehr reicht es aus, wenn die Wanne unmittelbar am Fahrzeug angeordnet ist, und die Brücke mit ihrem Endglied und mit den daran befestigten vertikal und horizontal drehbaren Rollen daraufgelegt wird. Aufgrund des Eigengewichts der Brücke verbleibt diese in der Wanne.

Nach einem weiteren Merkmal der Erfindung weist die Übergangsbrücke Tritt- und Gleitglieder auf; hierbei sind die Tritt- und Gleitglieder ineinander verschieblich gelagert. bzw. teleskopartig ineinander verschachtelt, so daß bei Kurvenfahrten kein Spalt zwischen den einzelnen Gliedern und hier insbesondere zwischen den Trittgliedern entstehen kann. Durch die verschachtelte Anordnung der einzelnen Glieder ineinander wird auch gewährleistet, daß die Glieder eine gewisse Tragfunktion übernehmen können. Da im wesentlichen nur die Trittglieder belastet werden, können die Gleitglieder aus einer Kunststoff-, Holz- oder Sandwichkonstruktion hergestellt werden. Die Trittglieder selbst sind als Aluminiumprofil ausgebildet.

Anhand der Zeichnungen wird die Erfindung beispielhaft näher erläutert.
- Fig. 1: zeigt die Brücke in einer Draufsicht, wobei das Scherengestell seitlich angeordnet ist;

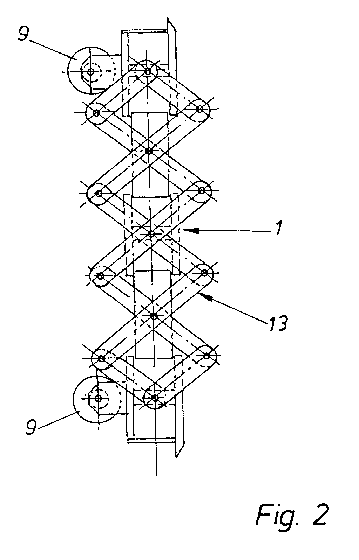

- Fig. 2: zeigt eine Seitenansicht;
- Fig. 3: zeigt einen Ausschnitt gemäß Fig. 2 in vergrößerter Darstellung;
- Fig. 4: zeigt die Verbindung des Scherengestells mit einem Glied der Gliederbrücke;
- Fig. 5: zeigt die Anordnung der Brücke zwischen zwei Fahrzeugen;
- Fig. 6: zeigt einen Schnitt gemäß der Linie VI-VI aus Fig. 1;
- Fig. 7: zeigt die Brücke in einer Draufsicht, wobei das Scherengestell unter der Brücke angeordnet ist.

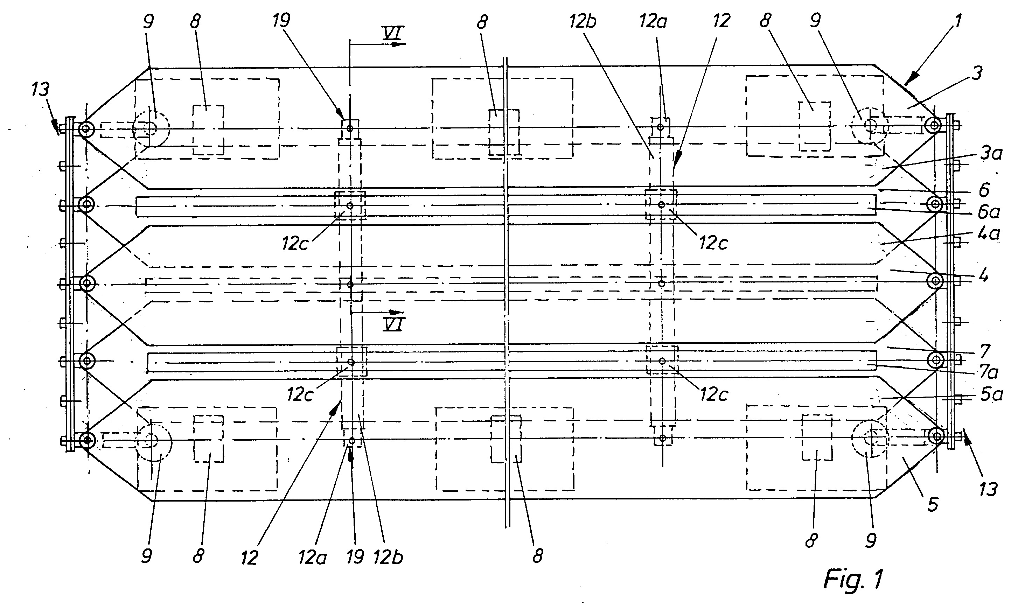

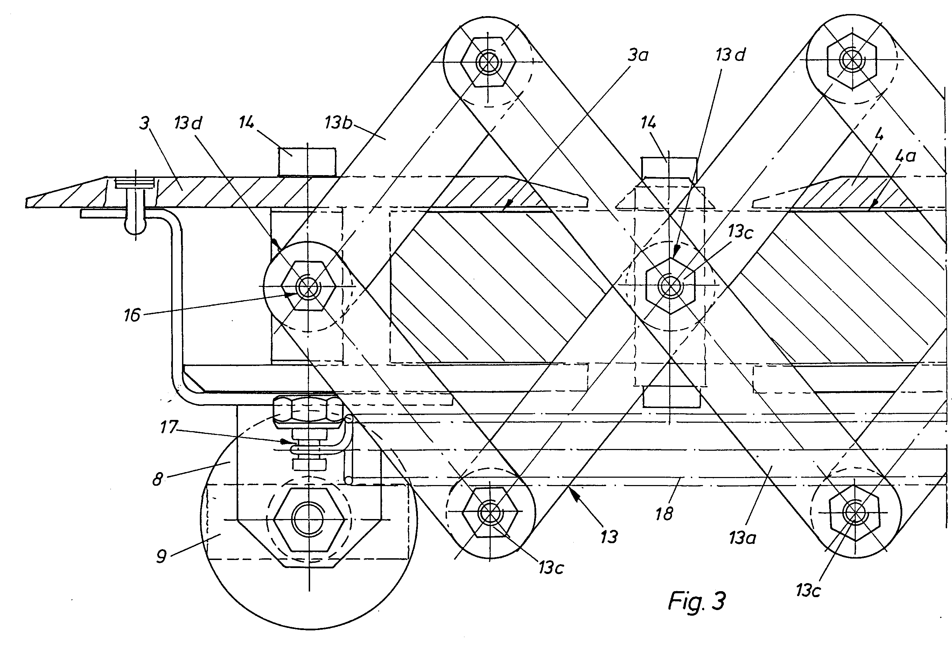

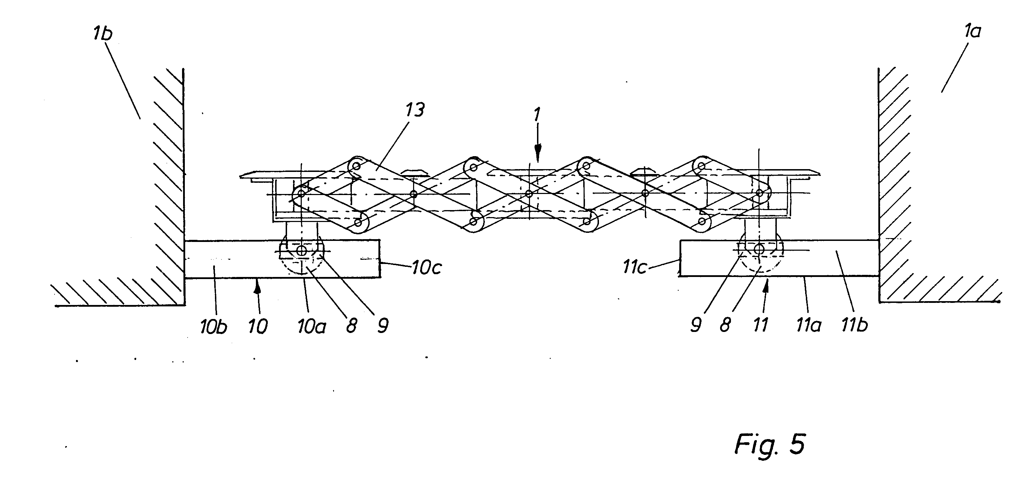

Bei der in Fig. 1 dargestellten und mit 1 bezeichneten Übergangsbrücke zwischen zwei Fahrzeugen 1a, 1b (Fig. 5) sind Trittglieder 3, 4 und 5 vorgesehen, sowie Gleitglieder 6 und 7, wobei das Gleitglied in dem Trittglied verschieblich verschachtelt gelagert ist. Zur Aufnahme des Gleitgliedes 6, 7 besitzt das Trittglied 3, 4, 5 auf seiner dem Gleitglied 6, 7 zugewandten Seite eine nach Art eines U-Profils ausgebildete offene Flanke 3a, 4a, 5a (Fig. 1, Fig. 3). Die Gleitglieder weisen auf ihrer Oberseite einen Wulst 6a, 7a, dessen Höhe derart gewählt ist, daß mit der Oberkante der Trittglieder 3 - 5 eine Ebene gebildet wird. Am Endglied 3 und 5 sind horizontal und vertikal angeordnete Rollen 8, 9 vorgesehen. Die Rollen 8 und 9 lagern in der Wanne 10, 11 des jeweiligen Fahrzeugs (Fig. 5); hierbei ruht die vertikale Rolle 8 auf dem Wannenboden 10a, 11a, wo hingegen die horizontal drehende Rolle 9 an den Seitenwänden 10b, 11b anliegt. Gehalten wird die Brücke in den Wannen 10, 11 dadurch, daß die vertikalen Rollen 8 an dem Wannenrand 10c bzw. 11c anstoßen.

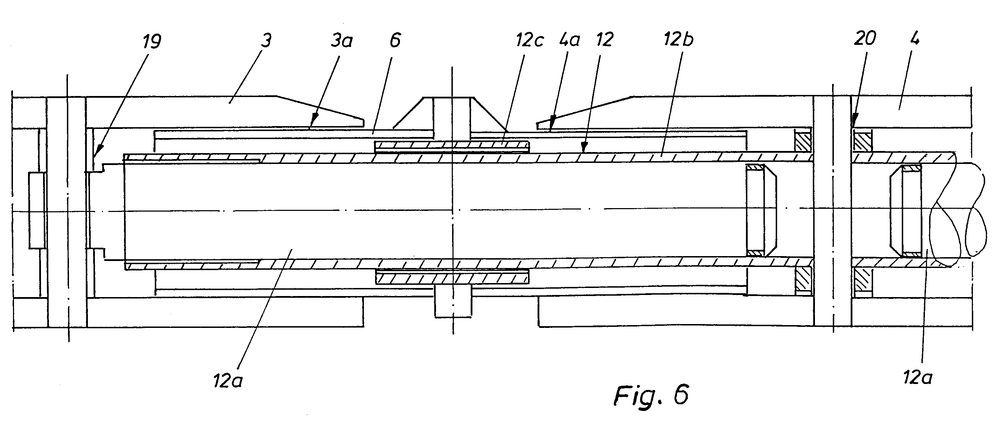

Durch die ineinander verschachtelte Anordnung der Tritt- und Gleitglieder 3 - 7 wird erreicht, daß die Übergangsbrücke 1 im wesentlichen selbsttragend ist, da sich die Glieder gegeneinander abstützen (Fig. 6). Um dennoch zu verhindern, daß eine übermäßige Durchbiegung entsteht, sind in der Übergangsbrücke zwei Teleskope 12 vorgesehen (Fig. 1). bestehend aus einer Teleskopstange 12a und einer Teleskophülse 12b. Die Teleskopstangen 12a sind jeweils endseitig mit dem äußeren Trittglied 3 bzw. 5 bei 19 verbunden, und werden verschieblich von der Teleskophülse 12b aufgenommen. Die Teleskophülse 12b ist an dem mittleren Trittglied 4 bei 20 angelenkt. Auf der Teleskophülse sind Gleitschuhe 12c angeordnet, die mit den Gleitgliedern 6, 7 verbunden sind (Fig. 6).

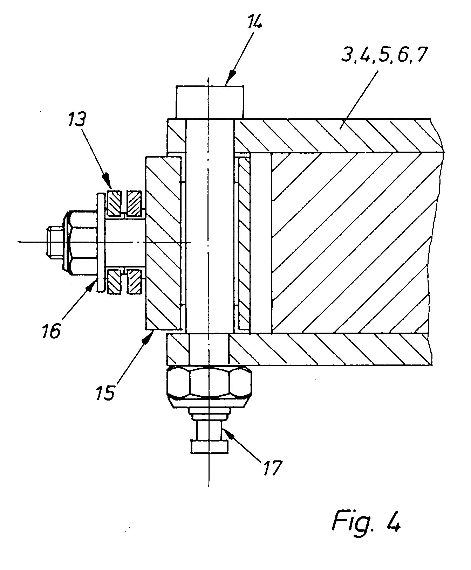

Zu beiden Seiten der Übergangsbrücke 1 befindet sich nach einer ersten Ausführungsform ein Scherengestell 13 (Fig. 3, Fig. 5). Das Scherengestell 13 ist mit den Gliedern 3 - 7 der Brücke 1 gelenkig verbunden. Die gelenkige Verbindung des Scherengestells 13 mit den Gliedern 3 - 7 erfolgt durch das Drehgelenk 15 (Fig. 4). Hierbei besitzt das Glied 3 - 7 einen vertikalen Bolzen 14, der eine Hülse drehbar aufnimmt, die einen insgesamt mit 16 bezeichneten horizontal verlaufenden Arm aufweist, an dem das Scherengestell 13 gelenkig angeordnet ist.

Die Ausbildung des Scherengestells 13 ergibt sich im einzelnen aus der Fig. 3. Das Scherengestell 13 besteht aus den gelenkig miteinander verbundenen Scherengliedern 13a und 13b, die durch Gelenke 13c miteinander verbunden sind. Im Bereich der Kreuzungspunkte 13d der Scherenglieder 13a und 13b, bzw. der Scherenglieder 13b untereinander, steht das Scherengestell durch den Arm 16 mit den einzelnen Gliedern 3 - 7 der Übergangsbrücke beweglich in Verbindung (Fig. 4).

Der Bolzen 14 zur Aufnahme der Hülse 15, an dem der Arm 16 angeordnet ist (Fig. 4), weist einen Ansatz 17 zur Aufnahme der Feder 18 (Fig. 3) auf. Die Feder 18 dient der Rückstellung der Übergangsbrücke nach ihrer Auslenkung in die Ausgangsposition.

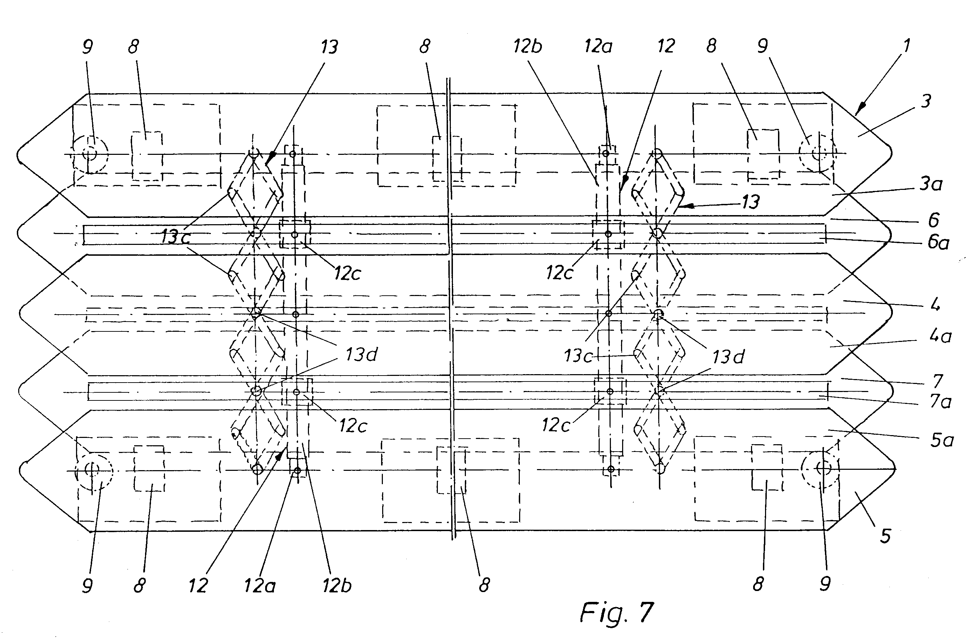

Nach einer anderen Ausführungsform (Fig. 7) ist das Scherengestell 13 horizontal aufspannbar unter der Brücke 1 angeordnet. Hierbei sind wiederum die einzelnen Tritt- und Gleitglieder 3 - 7 im Bereich der Kreuzungspunkte 13d der Scherenglieder 13a und 13b, bzw. der Scherenglieder 13b untereinander, beweglich angeordnet.

Wesentlich ist, daß bei der Anordnung von zwei Teleskopen und zwei Scherengestellen 13 mindestens ein Teleskop 12 und ein Scherengestell 13 an den äußeren Trittgliedern quer zur Längsachse der Brücke 1 verschiebbar gelagert ist, um einen Längenausgleich beim Spreizen bzw. bei der Kontraktion der Brücke zu ermöglichen.

## Patentansprüche

1. Übergangsbrücke (1) zwischen zwei gelenkig miteinander verbundenen Fahrzeugen (1a, 1b), wobei die Übergangsbrücke mehrere relativ zueinander bewegliche und ineinander verschiebliche Tritt-(3, 4, 5) und Gleitglieder (6, 7) aufweist,
**dadurch gekennzeichnet**,
daß die Glieder (3-7) durch ein Scherengestell zur Erzeugung einer fächerartigen Bewegung bei Spreizung und Kontraktion der Gliederbrücke (1) miteinander verbunden sind, wobei das Scherengestell (13) unter Federspannung (18) steht.

2. Übergangsbrücke nach Anspruch 1,
**dadurch gekennzeichnet**,
daß der Abstand der Glieder (3-7) der Brücke (1) zueinander im wesentlichen gleich gehalten wird.

3. Übergangsbrücke nach Anspruch 1,
**dadurch gekennzeichnet**,
daß das Scherengestell (13) in vertikaler Ebene aufspannbar ist.

4. Übergangsbrücke nach Anspruch 1,
**dadurch gekennzeichnet**,
daß im Bereich der Kreuzungspunkte (13d) zweier Glieder (13a, 13b) des Scherengestells (13) Mittel (15) zur Verbindung mit einem Glied (3-7) der Übergangsbrücke (1) vorgesehen sind.

5. Übergangsbrücke nach Anspruch 4,
**dadurch gekennzeichnet**,
daß das Mittel (15) zur Verbndung des Scherengestells (13) mit dem Glied (3 - 7) als Drehgelenk (15) ausgebildet ist.

6. Übergangsbrücke nach Anspruch 1,
**dadurch gekennzeichnet**,
daß die Glieder (3 - 7) der Übergangsbrücke (1) ineinander verschieblich gelagert sind.

7. Übergangsbrücke nach Anspruch 1,
**dadurch gekennzeichnet**,
daß die Übergangsbrücke (1) in zwei Raumrichtungen formschlüssig mit den Fahrzeugen (1a, 1b) verbindbar ist.

8. Übergangsbrücke nach Anspruch 1,
**dadurch gekennzeichnet**,
daß das Endglied (3, 5) der Übergangsbrücke (1) Mittel zur Verbindung mit dem Fahrzeug (1a, 1b) aufweist.

9. Übergangsbrücke nach Anspruch 8,
**dadurch gekennzeichnet**,
daß das Mittel zur Verbindung mit dem Fahrzeug (1a, 1b) vertikal und horizontal an dem Glied (3, 7) der Übergangsbrücke (1) angeordnete Rollen (8, 9) vorgesehen sind, die durch eine am Fahrzeug angeordnete Wanne (10, 11) aufnehmbar sind.

10. Übergangsbrücke nach Anspruch 1,
**dadurch gekennzeichnet**,
daß an der Unterseite der Brücke (1) ein Teleskop (13) vorgesehen ist.

11. Übergangsbrücke nach Anspruch 10,
**dadurch gekennzeichnet**,
daß die Glieder (6, 7) der Übergangsbrücke (1) durch Gleitschuhe (12c) mit dem Teleskop (12) verbindbar sind.

## Claims

1. Intercommunicating gangway (1) between two vehicles (1a, 1b) linked to each other, whereas the intercommunicating gangway has several stepping (3, 4, 5) and gliding members (6, 7) being movable relative to each other as well as slidable against each other,
**characterized in that** the members (3 - 7) are linked together by a slidable lattice stand (13) which produces a fan-like motion when the gangway (1) is extended and contracted, the slidable lattice stand (13) being under spring load (18).

2. Intercommunicating gangway according to claim 1,
**characterized in that** the spacing between the members (3 - 7) of the gangway (1) is kept essentially equal.

3. Intercommunicating gangway according to claim 1,
**characterized in that** the slidable lattice stand (13) is vertically tenterable.

4. Intercommunicating gangway according to claim 1,
**characterized in that** means (15) are provided at the crossing point (13d) of two members of the slidable lattice stand (13) for linkage with a member of the intercommunicating gangway (1).

5. Intercommunicating gangway according to claim 4,
**characterized in that** the means (15) used to link the slidable lattice stand (13) to the member (3 - 7) is designed as a swivel joint (15).

6. Intercommunicating gangway according to claim 1,
**characterized in that** the members (3 - 7) of the intercommunicating gangway (1) are positioned so as to be slidable against each other.

7. Intercommunicating gangway according to claim 1,
**characterized in that** the intercommunicating gangway (1) can form-fittingly be connected to the vehicles (1a, 1b) in two directions in space.

8. Intercommunicating gangway according to claim 1,
**characterized in that** the last member (3, 5) of the intercommunicating gangway (1) has been provided with means allowing the connection to the vehicle (1a, 1b).

9. Intercommunicating gangway according to claim 8,
**characterized in that** rollers (8, 9) are placed for connection with the vehicle (1a, 1b) vertically and horizontally on the member (3, 5) of the intercommunicating gangway (1) and are received by a case (10, 11) accomodated on the vehicle.

10. Intercommunicating gangway according to claim 1,
**characterized in that** a telescope (12) is provided for on the underside of the gangway (1).

11. Intercommunicating gangway according to claim 10,
**characterized in that** the members (6, 7) of the intercommunicating gangway (1) are linkable to the telescope (12) by means of gliding shoes (12c).

## Revendications

1. Passerelle d'intercommunication (1) entre deux véhicules articulés (1a, 1b), la passerelle d'intercommunication étant pourvue de plusieurs marches (3, 4, 5) et surfaces de glissement (6, 7) mobiles les unes par rapport aux autres et coulissant l'une dans l'autre,
**caractérisée en ce que**
les membres (3 - 7) sont reliés entre eux par un châssis à ciseaux (13) s'ouvrant et se fermant comme un éventail lors de l'extension et de la contraction de la passerelle articulée (1), le châssis à ciseaux (13) se trouvant sous tension de ressort (18).

2. Passerelle d'intercommunication selon la revendication 1,
**caractérisée en ce que** l'écart entre les membres (3 - 7) de la passerelle (1) reste essentiellement le même.

3. Passerelle d'intercommunication selon la revendication 1,
**caractérisée en ce que** le châssis à ciseaux (13) peut être monté à la verticale.

4. Passerelle d'intercommunication selon la revendication 1,
**caractérisée en ce que**, pour rattacher le châssis à ciseaux (13) à un membre (3 - 7) de la passerelle d'intercommunication (1), des moyens (15) sont prévus aux endroits de croisement (13d) de deux membres (13a, 13b) du châssis à ciseaux (13).

5. Passerelle d'intercommunication selon la revendication 4,
**caractérisée en ce que** le moyen (15) destiné à rattacher le châssis à ciseaux (13) au membre (3 - 7) est une articulation pivotante (15).

6. Passerelle d'intercommunication selon la revendication 1, **caractérisée en ce que** les membres (3 - 7) de la passerelle d'intercommunication (1) sont disposés de façon coulissante.

7. Passerelle d'intercommunication selon la revendication 1,
**caractérisée en ce que** la passerelle d'intercommunication (1) peut être rattachée aux véhicules (1a, 1b) de façon à épouser leur forme dans deux directions.

8. Passerelle d'intercommunication selon la revendication 1,
**caractérisée en ce que** le dernier membre (3, 5) de la passerelle d'intercommunication (1) est pourvue de moyens destinés au rattachement avec le véhicule (1a, 1b).

9. Passerelle d'intercommunication selon la revendication 8,
**caractérisée en ce que** les moyens destinés au rattachement avec le véhicule (1a, 1b) sont des rouleaux (8, 9) placés verticalement et horizontalement sur le membre (3, 5) de la passerelle d'intercommunication (1), ces rouleaux pouvant être reçus par un bassin (10, 11) disposé sur le véhicule.

10. Passerelle d'intercommunication selon la revendication 1,
**caractérisée en ce que** un télescope (12) est prévu sur la partie inférieure de la passerelle (1).

11. Passerelle d'intercommunication selon la revendication 10,
**caractérisée en ce que** les membres (6, 7) de la passerelle d'intercommunication (1) sont rattachables au télescope (12) au moyen de coulisseaux (12c).
